# EUROPEAN PATENT APPLICATION

(11) **EP 3 067 765 A1**
(43) Date of publication of application: **14.09.2016**
(21) Application number: 15158980.1
(22) Date of filing: 13.03.2015
(51) Int. Cl.: G05B 19/05, G06F 12/14

(54) **INTELLIGENT PROGRAMMABLE LOGIC CONTROLLER AND MEMORY ACCESS MANAGEMENT METHOD THEREOF**

(71) Applicant: Siemens Aktiengesellschaft, 80333 München (DE)
(72) Inventor: Mishra, Jitendra Kumar, 767002 Bolangir, Odisha (IN); Tiwari, Jay Prakash, 560037 Bangalore (IN)
(74) Representative: Isarpatent

(57) **Abstract**

The present invention provides a programmable logic controller (PLC) (102) and a method of managing access to a memory (108) of the PLC (102). In one embodiment, the PLC (102) comprises a memory (108) comprising a plurality of memory blocks (202A-P), each of the memory blocks (202A-P) is associated with unique memory address. The PLC (102) also comprises an interface unit (112) connectable to multiple Human Machine Interface (HMI) devices (104A-N), and a processor (110) coupled to the memory (108) and the interface unit (112). The processor (110) is configured for determining a memory block (202A) from the plurality of memory blocks (202A-P) based on a request to assign a lock to said memory block (202A) received from one of the HMI devices (104A-N), and dynamically assigning the lock to said memory block (202A) such that said memory block (202A) is protected from access by the remaining HMI devices (104B-N).

## Description

The present invention relates to the field of automation system, and more particularly relates to an intelligent programmable logic controller (PLC) and memory access management method thereof.

A programmable logic controller is an industrial computer control system used in an automation system to control execution of numerous independent tasks of one or more field devices. Generally, a PLC operate according to a control program to continuously monitor state of equipments by evaluating signals from one or more field devices. Typically, the PLC is connected to a plurality of human-machine interface (HMI) devices through which a user or operator monitors state of the equipments and controls the equipment or processes.

Generally, a PLC consists of a processor for executing the control program, a memory for storing process values, and interface unit for interfacing with multiple HMI devices. The memory consists of a plurality of memory blocks. Each memory block, which is identified by a memory address, stores data (e.g., process values) associated with a specific HMI device. Each memory address corresponding to the memory block in the PLC may be represented by a tag on a graphical user interface (GUI) screen of the specific HMI device.

Currently, the GUI screen allows the operator to select a tag representing a memory address of a memory block and modify data stored in the memory block during runtime. Thus, all the HMI devices connected to the PLC have access to every memory block and data stored therein. It may so happen that an operator of one HMI device may accidently modify data associated with other HMI device which is stored in one of the memory blocks. Consequently, this may affect the operation of the equipment(s) under control of the PLC. For example, consider that in an industrial setting, a motor's ON/OFF status is set in a memory address '%MW100' of the PLC as '1/0' by an operator of a first HMI device. Since a second HMI device connected to the same PLC can also access the motor's ON/OFF status stored in the memory address '%MW100', there is possibility that the operator of the second HMI device may accidently change the motor's ON/OFF status set in the memory address '%MW100' to a different value without the knowledge of the operator of the first HMI device. This may lead to hazard or damage to the motor and other equipments in the industrial setting.

In light of the above, there exists a need for protecting memory block(s) of the memory in the PLC from access by unauthorized HMI devices.

Therefore, it is the object of the present invention to provide an intelligent programmable logic controller (PLC) and a method of managing access to a memory of the PLC.

The method comprises receiving a request to assign a lock to one of memory blocks in a memory of a PLC from a first human machine interface (HMI) device. For example, the memory block stores process values associated with the first HMI device. The request comprises a memory address associated with the memory block. The request may also comprise a unique identifier of the first HMI device. Furthermore, the method comprises identifying the memory block in the memory based on the memory address of the memory block. Moreover, the method comprises dynamically assigning the lock to the memory block. Thus, the memory block is protected from access by a second HMI device connected to the PLC in runtime. Advantageously, the process values stored in the memory block are secured.

Therein, in dynamically assigning the lock to the memory block, the method comprises determining whether the memory block is protected using a lock table. If the memory block is not protected, the method comprises setting a protection status of the memory block to be protected in the lock table, assigning a unique password to the memory block in the lock table, and updating a unique identifier of the first HMI device in the lock table. However, if the memory block is protected, the method comprises rejecting the request to assign the lock to the memory block.

Additionally, the method comprises receiving a request to access a memory block from the second HMI device. The request comprises a memory address of the memory block and an unique identifier of the second HMI device. The method further comprises determining whether the memory block is protected from access by the second HMI device using the lock table. If the memory block is protected, the method comprises denying access to the memory block to the second HMI device. If the memory block is not protected, the method comprises providing access to the memory block to the second HMI device. Thus, the second HMI device is denied access to the memory block protected by the first HMI device.

Therein, in determining whether the memory block is protected from access by the second HMI device, the method comprises determining the protection status set for the memory block using the lock table. Then, the method comprises determining whether the protection status for the memory block is set as protected in the lock table. If the protection status is set as protected, the method comprises determining whether the memory block is protected by the first HMI device using the lock table.

Also, the method comprises receiving a request to access the memory block from the first HMI device. The request comprises a unique identifier of the first HMI device, a unique password, and a memory address of the memory block. The method further comprises determining whether the memory block is protected based on the memory address of the memory block using the lock table. If the memory block is protected, the method comprises verifying the unique password for accessing the memory block using the lock table. Thereafter, the method comprises determining whether the unique password is successfully verified. If the unique password is successfully verified, the method comprises providing access to the memory block to the first HMI device. If the unique password is not successfully verified, the method comprises denying access to the memory block to the first HMI device.

Therein, in providing access to the memory block to the first HMI device, the method comprises receiving a request to update a process value stored in the memory block, and updating the process value stored in the memory block based on the request. Thus, the first HMI device which has protected the memory block is allowed to modify the process value stored in the memory block.

Furthermore, the method comprises receiving a request to delete the lock assigned to the memory block from the first HMI device. The request comprises a unique identifier of the first HMI device, a unique password and a memory address of the memory block. The method also comprises determining whether the memory block is protected based on the memory address of the memory block using the lock table. If the memory block is protected, the method comprises determining whether the memory block is protected by the first HMI device. If the memory block is protected by the first HMI device, the method comprises verifying the unique password received in the request using the lock table. If the memory block is not protected by the first HMI device, the method comprises rejecting the request to delete the lock assigned to the memory block. Further, the method comprises determining whether the unique password is successfully verified. If the unique password is successfully verified, the method comprises dynamically deleting the lock assigned to the memory block. If the unique password is not successfully verified, the method comprises rejecting the request to delete the lock assigned to the memory block.

Also, the method comprises updating the unique password assigned to the memory block in the lock table based on a request received from the first HMI device.

The object of the present invention is also achieved by a programmable logic controller (PLC) which comprises a memory with a plurality of memory blocks, an interface unit connectable to multiple Human Machine Interface (HMI) devices, and a processor coupled to the memory and the interface unit. Each of the memory blocks is associated with a unique memory address. For example, each memory block stores process values associated with equipments in an automation environment. According to the present invention, the processor is configured for determining a memory block from the plurality of memory blocks based on a request to assign a lock to said memory block received from one of the HMI devices. The processor is also configured for dynamically assigning the lock to said memory block. Thus, the PLC intelligently assigns the lock to the memory block such that said memory block is protected from access by the remaining HMI devices.

Therein, in assigning the lock to said memory block, the processor is configured for determining whether said memory block is protected using a lock table. If the memory block is hot protected, the processor is configured for setting a protection status of the memory block to protected in the lock table. The processor is also configured for assigning a unique password to the memory block in the lock table, and a unique identifier associated with said HMI device in the lock table.

Therein, the processor is further configured for determining whether a memory block is protected based on a request to access said memory block received from said one of the HMI devices using a lock table. The request comprises a unique identifier of said HMI device, a unique password and a memory address of said memory block. If said memory block is protected, the processor is configured for verifying the unique password for accessing said memory block using the lock table. The processor is also configured for determining whether the unique password is successfully verified. If the unique password is successfully verified, the processor is configured for providing access to said memory block to said HMI device. If the unique password is not successfully verified, the processor is configured for denying access to said memory block to said HMI device.

Furthermore, the processor is configured for determining whether the memory block is protected based on a request to delete the lock assigned to the memory block from one of the HMI devices using the lock table. If the memory block is protected, the processor is configured for determining whether the memory block is protected by said HMI device. If the memory block is protected by said HMI device, the processor is configured for verifying the unique password received in the request using the lock table. If the memory block is not protected by said HMI device, the processor is configured for rejecting the request to delete the lock assigned to the memory block. Thereafter, the processor is configured for determining whether the unique password is successfully verified. If the unique password is successfully verified, the processor is configured for dynamically deleting the lock assigned to the memory block. If the unique password is not successfully verified, the processor is configured for rejecting the request to delete the lock assigned the memory block.

The object of the present invention is also achieved by providing an automation system comprising a programmable logic controller (PLC) for managing access to its memory by HMI devices. The automation system can be industrial automation system, home automation system, building automation system, energy automation system, plant automation system and the like.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a block diagram of an automation system according to an embodiment of the present invention;
- FIG 2: is a schematic representation depicting a memory of a programmable logic controller (PLC) comprising a plurality of memory blocks;
- FIG 3: is a process flowchart illustrating an exemplary method of assigning a lock to a memory block in the memory of the PLC according to one embodiment of the present invention;
- FIG 4: is a process flowchart illustrating an exemplary method of managing access to memory blocks in the memory of the PLC according to another embodiment of the present invention;
- FIG 5: is a process flowchart illustrating an exemplary method of deleting the lock assigned to the memory block in the memory of the PLC according to yet another embodiment of the present invention;
- FIG 6: is a schematic representation depicting a lock table used for managing access to the memory of the PLC;
- FIG 7: is a schematic representation depicts the lock table after assigning of a lock to a memory block; and
- FIG 8: is a schematic representation depicting the lock table after deletion of the lock assigned to the memory block.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

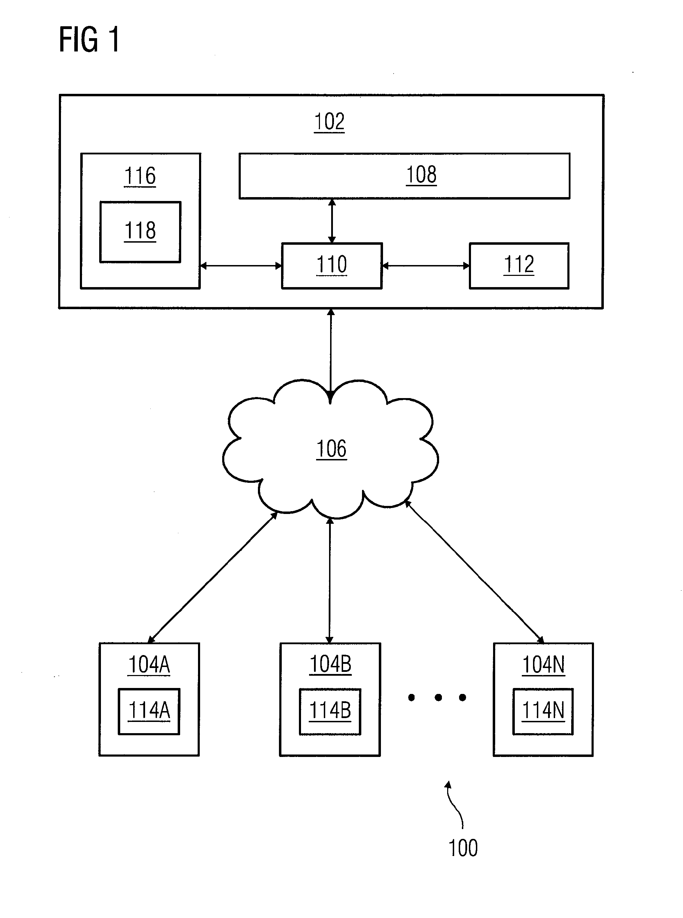

FIG 1 illustrates a block diagram of an automation system 100, according to an embodiment of the present invention. The automation system 100 comprises a programmable logic controller (PLC) 102, and a plurality of human-machine interface (HMI) devices 104A-N. The HMI devices 104A-N is provided with graphical user interface (GUI) screens 114A-N for interacting with the PLC 102. The HMI devices 104A-N are connected to the PLC 102 via a network 106. The network 106 may be a wired network or a wireless network. The automation system 100 may also include Input/Output modules, field devices, servers and the like for managing equipments in a setting, however these components are not shown in FIG 1. The term 'automation system' refers to an industrial automation system, a home automation system, a building automation, an energy automation system, a plant automation system and the like.

The PLC 102 comprises a memory 108, a processor 110, an interface unit 112, and a storage unit 116. The processor 110 is coupled to the memory 108, the interface unit 112 and the storage unit 116.

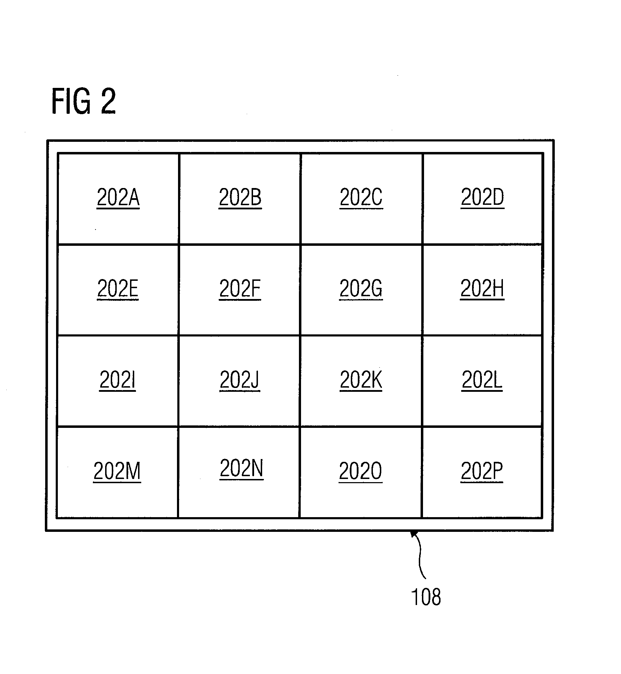

As shown in FIG 2, the memory 108 comprises a plurality of memory blocks 202A-P. Each of the memory blocks 202A-P stores process data associated with specific HMI devices 104A-N. The memory blocks 202A-P are associated with unique memory addresses which are represented as tags in the respective HMI devices 104A-N. The interface unit 112 enables the HMI devices 104A-N to connect to the PLC 102. The storage unit 116 comprises a lock table 118. The lock table 118 stores memory addresses of the memory blocks 202A-P, a unique identifier of the HMI devices 104A-N, a protection status of the memory blocks 202A-P and a unique password assigned to the memory blocks 202A-P.

According to the present invention, the PLC 102 manages access to the memory blocks 202A-P by the HMI devices 104A-N. In the present invention, any of the HMI devices 104A-N can protect any of the unprotected memory blocks 202A-P so that access to unauthorized HMI devices 104A-N to the protected memory blocks 202A-P is restricted. The term 'access' refer to reading and/or writing data (e.g., process values) stored in the protected memory blocks 202A-P. In case an unauthorized HMI device attempts to access a protected memory block, the PLC 102 may deny the access to the protected memory block. However, in case authorized HMI device attempts to access a protected memory block, the PLC 102 may allow access to the protected memory block to the authorized HMI device. The term 'authorized HMI device' means a HMI device which has protected the memory block. In exemplary operation, an HMI device (e.g., HMI device 104A) sends a request to the PLC 102 to protect a memory block storing process values associated with the HMI device 104A. For example, the operator of the HMI device 104A may select a tag corresponding to a memory address of the memory block to be protected and click on a 'protect' option displayed on the GUI screen 114A. Consequently, the HMI device 104A may send the request for assigning a lock to the selected memory block.

Upon receiving the request, the processor 110 determines the memory block to be protected based on the request. For the purpose of illustration, consider that the memory block 202A is to be protected. Accordingly, the processor 110 dynamically assigns a lock to the memory block 202A. For example, the processor 110 sets a protection status of the memory block 202A in the lock table 118 to "protected". Also, the processor 110 stores unique password for accessing the memory block 202A and unique identifier of the HMI device 104A in the lock table 118. Upon assigning the lock, the HMI device 104A may display a notification indicating that the lock is assigned to the memory block 202A on the GUI screen 114A.

In another instance, the HMI device 104B may attempt to modify associated process values stored in the memory block 202A. For example, the operator of the HMI device 104A may select the tag corresponding to the memory address of the memory block 202A and click on 'modify' option using the GUI screen 114A. Consequently, the HMI device 104B may send a request to access the memory block 202A to the PLC 102. In such case, the processor 110 determines that the memory block 202A is protected by the HMI device 104A using the lock table 118 and denies access to the memory block 202A to the HMI device 104B. Consequently, the HMI device 104B may display a notification indicating that access to the memory block is failed on the GUII screen 114B. On the other hand, when the HMI device 104A attempts to modify the associated process values stored in the memory block 202A, the processor 110 determines that the memory block 202A is protected by the HMI device 104A and verifies unique password inputted by the operator of the HMI device 104A using the lock table 118. Upon successful verification, the processor 110 provides access to the memory block 202A to the HMI device 104A. Thus, the HMI device 104A is allowed to alter the process values stored in the memory block 202A since the HMI device 104A has protected the memory block 202A from access by other HMI devices 104B-N.

In yet another instance, the HMI device 104A may attempt to update the unique password assigned to the memory block 202A. For example, the operator of the HMI device 104A may select the tag corresponding to the memory address of the memory block 202A and click on 'update password' option displayed on the GUI screen 114A. Consequently, the HMI device 104A may send a request to update the unique password to the PLC 102. The request may contain new unique password as well as old unique password along with the unique identifier of the HMI device 104A. In such case, the processor 110 updates the lock table 118 with a new unique password for accessing the memory block 202A.

In another instance, the HMI device 104A may attempt to delete the lock assigned to the memory block 202A. For example, the operator of the HMI device 104A may select the tag corresponding to the memory address of the memory block 202A and click on 'delete lock' option displayed on the GUI screen 114A. Consequently, the HMI device 104A may send a request to delete the lock to the PLC 102. In such case, the processor 110 determines whether the memory block 202A is protected by the HMI device 104A using the lock table 118. If the memory block 202A is protected by the HMI device 104A, the processor 110 verifies the unique password provided by the operator of the HMI device 104A using the lock table 118. If the unique password is successfully verified, the processor 118 dynamically removes the protection assigned to the memory block 202A. Consequently, the HMI device 104A may display a notification indicating that the lock assigned to the memory block is deleted on the GUII screen 114A. Hereafter, the HMI devices 104A-N can access the memory block 202A since no protection is assigned to the memory block 202A. During removal of the lock, the processor 110 updates the protection status for the memory block 202A in the lock table 118. Also, the processor 110 deletes the unique identifier of the HMI device 104A and the unique password of the HMI device 104A from the lock table 118. In this manner, the PLC 102 manages access to the memory blocks 202A-P by the HMI devices 104A-N.

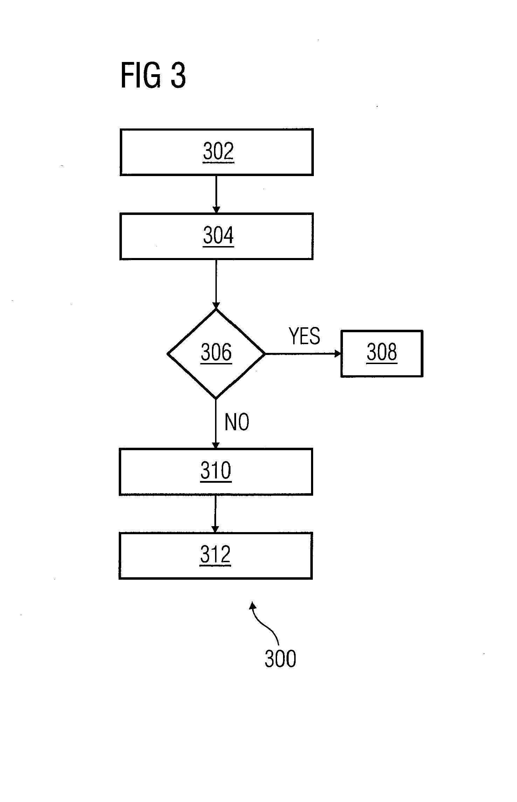

FIG 3 is a process flowchart 300 illustrating an exemplary method of assigning a lock to a memory block in a memory 108 of a PLC 102 according to an embodiment of the present invention. Consider that an operator at the HMI device 104A wants to protect a memory block 202A which stores process values associated with the HMI device 104A. The HMI device 104A generates a request to assign a lock to the memory block 202A based on the input from the operator provided via the graphical user interface (GUI) screen 114A.

Accordingly, at step 302, the request to assign the lock to the memory block 202A is received by the PLC 102 from the HMI device 104A. The request may consist of an unique identifier associated with the HMI device 104A, a memory address associated with the memory block 202A and an unique password to be assigned to the memory block 202A. At step 304, the memory block 202A in the memory 108 of the PLC 102 is identified based on the memory address of the memory block 202A.

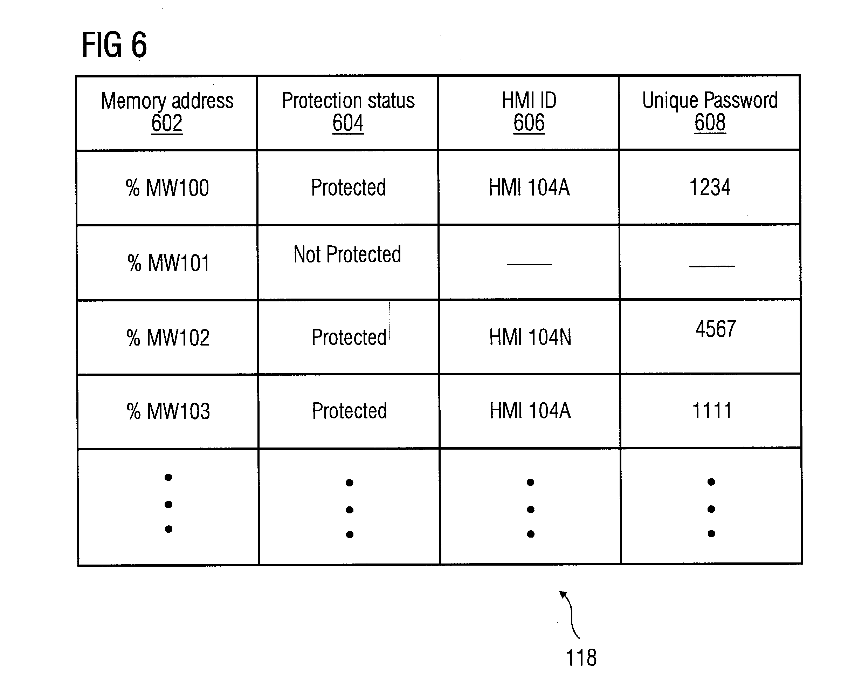

At step 306, it is determined whether the memory block 202A is protected by any other HMI devices 104B-N using a lock table 118. An exemplary lock table 118 is shown in FIG 6. The lock table 118 comprises memory addresses associated with the memory blocks 202A-P and a protection status associated with the memory blocks 202A-P. If any of the memory blocks 202A-P are protected, then the lock table 118 also consists of an unique identifier of the HMI device which has protected the memory block(s) and an unique password assigned to the protected memory block(s). At step 306, it is determined by referring to the lock table 118 as whether the protection status associated with the memory block 202A is set as 'protected'.

If it is determined that the memory block 202A is protected, then at step 308, the request to assign the lock to the memory block 202A is rejected. In such case, an error message indicating that the memory block 202A cannot be protected is displayed on the GUI screen 114A of the HMI device 104A. If it is determined that the memory block 202A is not protected, then at step 310, the protection status associated with the memory block 202A is set as protected in the lock table 118. Additionally, at step 312, the unique password is assigned to the memory block 202A in the lock table 118. This unique password will be verified when the operator of the HMI device 104A wants to access the memory block 202A in future. In this manner, the memory block 202A which stores process values associated with the HMI device 104A is protected by dynamically assigning the lock to the memory block 202A during runtime. Thus, the HMI devices 104B-N cannot access the memory block 202A as it is protected by the HMI device 104A. Advantageously, the process values associated with the HMI device 104A in the memory block 202A are secured.

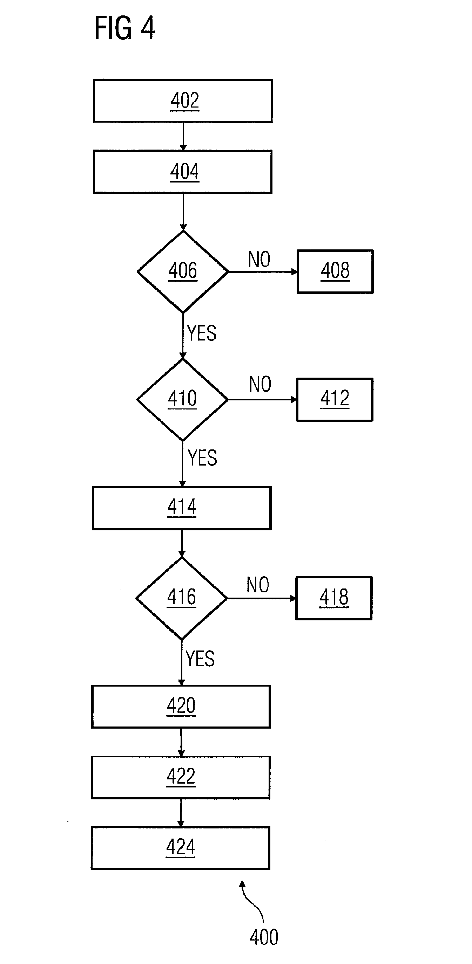

FIG 4 is a process flowchart 400 illustrating an exemplary method of managing access to memory blocks in the memory 108 of the PLC 102 according to another embodiment of the present invention. Consider that the operator of the HMI device 104A wishes to access the memory block 202A. The operator of the HMI device 104A generates a request to access the memory block 202A using the GUI screen 114A.

Accordingly, at step 402, the request to access the memory block 202A is received by the PLC 102 from the HMI device 104A. The request consists of an unique identifier associated with the HMI device 104A, an unique password assigned to the memory block 202A, and a memory address of the memory block 202A. At step 404, a protection status of the memory block 202A is determined from the lock table 118. For example, the protection status is set as 'protected' if the memory block 202A is assigned a lock while the protection status is set as 'not protected' in the lock table 118 if the memory block 202A is not assigned a lock.

At step 406, it is determined whether the protection status for the memory block 202A is set as 'protected' in the lock table 118. If the protection status is not set as 'protected' in the lock table 118, then at step 408, access to the memory block 202A is provided to the HMI device 104A. If the protection status is set as 'protected' in the lock table 118, then at step 410, it is determined whether the memory block 202A is protected by the HMI device 104A. For example, it is determined whether the memory block 202A is protected by the HMI device 104A based on whether the unique identifier of the HMI device 104A is present in the lock table 118.

If the memory block 202A is not protected by the HMI device 104A, then at step 412, access to the memory block 202A is denied to the HMI device 104A. This step is valid in the case the HMI device (e.g., the HMI devices 104B-N) has not protected the memory block 202A. If the memory block 202A is protected by the HMI device 104A, then at step 414, the unique password received in the request is verified. For example, the unique password is compared with the unique password assigned to the memory block 202A in the lock table 118. At step 416, it is determined whether the unique password is successfully verified. If the unique password is not successfully verified, then at step 418, the request to access the memory block 202A is rejected.

If the unique password is successfully verified, then at step 420, access to the memory block 202A is provided to the HMI device 104A. The term 'access' to the memory block 202A can refer to a read and/or write operation associated with a memory block. A HMI device which is provided the access to the memory block may read or write data into the memory block.

Once the access is provided, the operator of the HMI device 104A is allowed to change the process values in the memory block 202A. Accordingly, at step 422, a request to update process value stored in the memory block 202A is received from the HMI device 104A. For example, the GUI screen 114A may display on process values in an editable field. The operator may modify the process value in the editable field and click on 'update' option displayed on the GUI screen 114A. At step 424, the process value stored in the memory block 202A is updated. Thus, the HMI device 104A which has protected the memory block 202A is allowed to access the memory block 202A while the HMI devices 104B-N are denied the access to the memory block 202A.

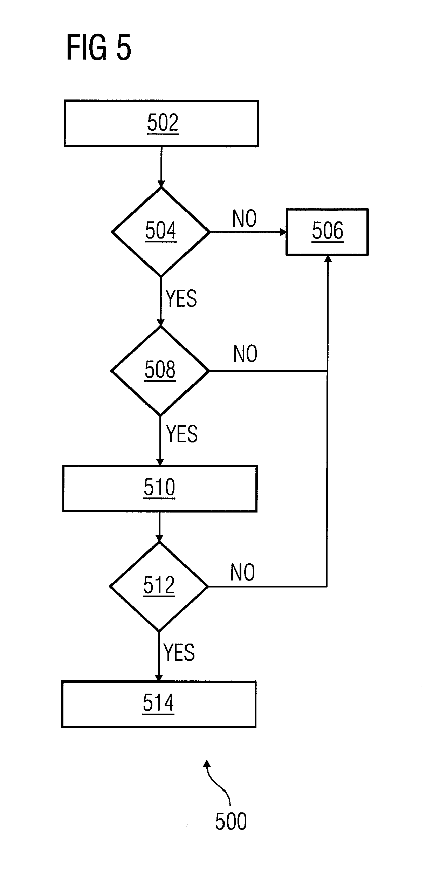

FIG 5 is a process flowchart 500 illustrating an exemplary method of deleting a lock assigned to a memory block in the memory 108 of the PLC 102 according to yet another embodiment of the present invention. As described in FIG 3, the PLC 102 has assigned the lock to the memory block 202A based on the request from the HMI device 104A. Now consider that the operator of the HMI device 104A wishes to delete the lock assigned to the memory block 202A. Accordingly, the operator of the HMI device 104A raises a request to delete the lock assigned to the memory block 202A using the GUI screen 114A.

Accordingly, at step 502, the request to delete the lock assigned to the memory block 202A is received by the PLC 102 from the HMI device 104A. The request may consist of unique identifier associated with the HMI device 104A, the unique password for deleting the lock and the memory address of the memory block 202A. At step 504, it is determined whether the memory block 202A is protected using the lock table 118. In one embodiment, it is determined whether the protection status corresponding to the memory block 202A is set as 'protected' in the lock table 118.

If it is determined that the memory block 202A is not protected, then at step 506, the request to delete the lock assigned to the memory block 202A is rejected since there is no lock assigned currently to the memory block 202A. If it is determined that the memory block 202A is protected, then at step 508, it is determined whether the memory block 202A is protected by the HMI device 104A. For example, it is determined from the lock table 118 whether the unique identifier in the request matches with a unique identifier of a HMI device which has protected the memory block 202A in the lock table 118. If the match is found, it is determined that the memory block 202A is protected by the HMI device 104A.

If it is determined that the memory block 202A is not protected by the HMI device 104A, then the request to delete the lock is rejected at step 506. If it is determined that the memory block 202A is protected by the HMI device 104A, then at step 510, the unique password received in the request is verified using the lock table 118. In one embodiment, the unique password received in the request is compared with the unique password assigned to the memory block 202A in the lock table 118.

At step 512, it is determined whether the unique password is successfully verified. If it is determined that the unique password is not successfully verified, then the request to delete the lock is rejected at step 506. If it is determined that the unique password is successfully verified, then at step 514, the lock assigned to the memory block 202A is deleted. For example, the protection status associated with the memory block 202A is changed to 'not protected' in the lock table 118. Also, the unique password assigned to the memory block 202A is removed from the lock table 118. Thus, upon deletion of the lock, the HMI devices 104A-N can access the memory block 202A without authentication as the memory block 202A is not protected by any of the HMI devices 104A-N.

FIG 6 is a schematic representation depicting a lock table 118 used for managing access to the memory 108 of the PLC 102. As depicted, the lock table 118 comprises a memory address field 602, a protection status field 604, a HMI ID field 606, and a unique password field 608. The memory address field 602 indicates memory addresses associated with various memory blocks. For example, the memory address field 602 displays memory addresses "%MW100", "%MW101", "%MW102" and "%MW103", where 'MW' represents memory area and 100, 101, 102, and 103 represent address areas. The protection status field 604 contains a protection status associated with respective memory blocks. For example, the protection status for the memory address "%MW100", "%MW102" and "%MW103" is displayed as "protected" since the memory blocks corresponding to these memory addresses are protected. The protection status field 604 displays the protection status for the memory address "%MW101" as "not protected" as the corresponding memory block is not protected by any of the HMI devices 104A-N.

The HMI ID field 606 contains unique identifier of HMI devices which have protected respective memory blocks. For example, the memory blocks having the memory addresses "%MW100" and "%MW103" are protected by the HMI device 104A. Hence, the HMI ID field 606 displays unique identifier as "HMI 104A" against the memory addresses "%MW100" and "%MW103". Similarly, the memory block associated with the memory address "%MW102" is protected by the HMI device 104N, hence the HMI ID field 606 displays the unique identifier as "HMI 104N".

The unique password field 608 contains unique password for the protected memory blocks. The unique password enables to provide authorized access memory blocks. For example, the unique password field 608 displays the unique passwords as "1234", "4567" and "1111" corresponding to the memory addresses "%MW100", "%MW102", and "%MW103" respectively. It can be noted that unique passwords can be alphanumeric character and may also include special characters. Also, length and strength of the unique password can be set based on security desired. As mentioned earlier, the lock table 118 is used to assign a lock to a memory block in the memory 108 of the PLC 102, delete the lock assigned to the memory block and/or provide access to the memory block to an authorized HMI device.

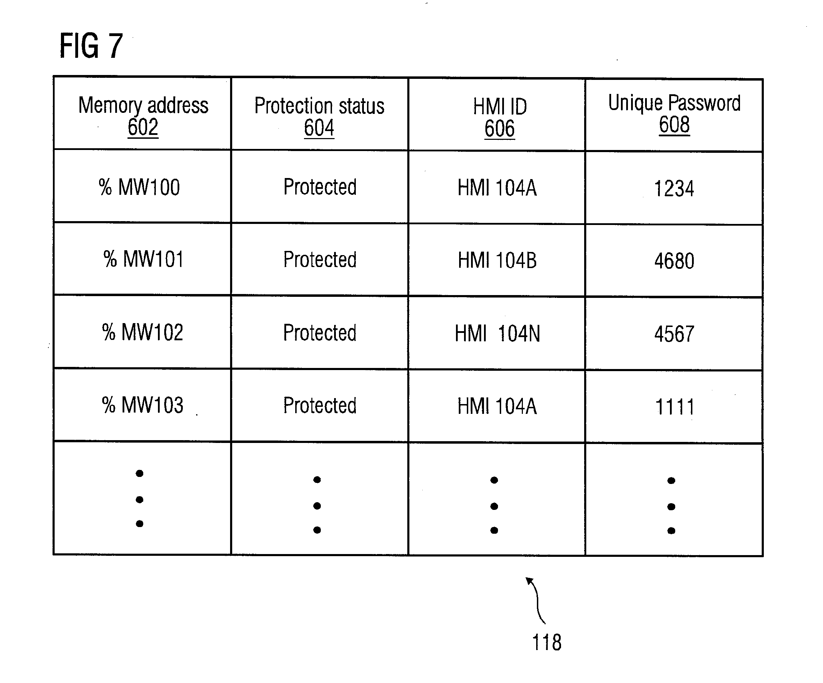

FIG 7 is a schematic representation depicting the lock table 118 after assigning of lock to memory block. Consider that operator of the HMI device 104B wishes to assign a lock to a memory block corresponding to the memory address "%MW101". Accordingly the PLC 102 assigns the lock to the memory block having the memory address "%MW101" based on the request from the HMI device 104B. During assignment of the lock, the PLC 102 has updated the protection status field 604, the HMI ID field 606, and the unique password field 608. As depicted, the protection status for the memory address "%MW101" in the protection status field 608 is changed from "non-protected" to "protected". Also, the HMI ID field 606 displays the unique identifier as "HMI 104B" and the unique password field 608 displays the unique password as "4680".

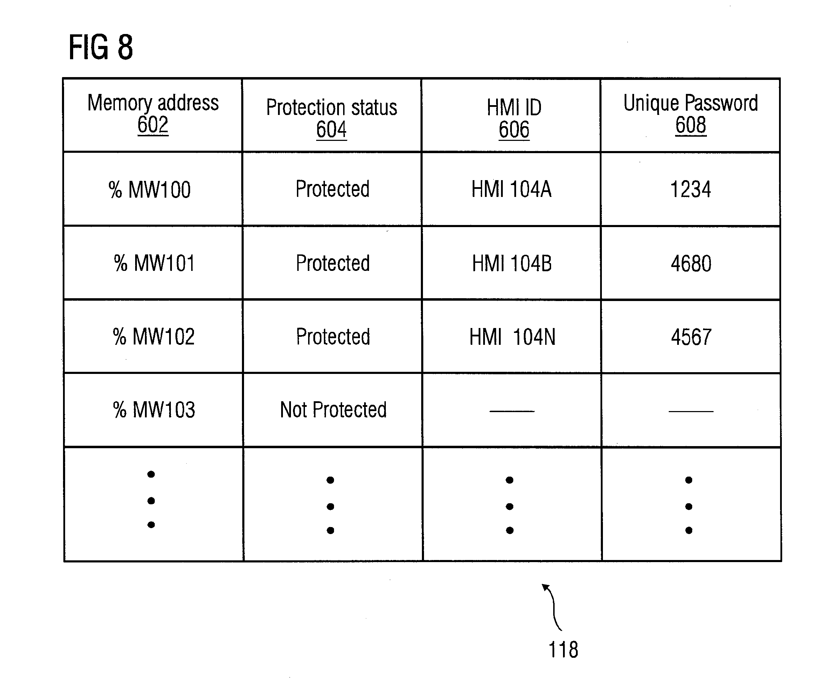

FIG 8 is a schematic representation depicting the lock table 118 after deletion of the lock assigned to the memory block. As depicted in the lock table 118 of FIG 6, the HMI device 104A has protected the memory blocks having the memory addresses "%MW100" and "%MW103". Now consider that the operator of the PLC 102 wants to delete the lock assigned to the memory block with the memory address "%MW103". Thus, a request for deleting the lock is sent to the PLC 102 by the HMI 104A. Accordingly, the PLC 102 deletes the lock assigned to the memory block with the address "%MW103". For deleting the lock, the PLC 102 changes the protection status of the memory address "%MW103" in the protection status field 604 from "protected" to "unprotected". Also, the PLC 102 removes the unique identifier of the HMI 104A from the HMI ID field 606 and the unique password "1111" from the unique password field 608 as depicted in FIG 8. In this manner, the PLC 102 manages the lock table 118.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A method of managing access to a memory (108) of a programmable logic controller (PLC) (102) in an automation environment, comprising:
receiving a request to assign a lock to a memory block (202A) of the memory (108) from a first human machine interface (HMI) device (104A) connected to the PLC (102), wherein the request comprises a memory address associated with the memory block (202A);
identifying the memory block (202A) in the memory (108) based on the memory address; and
dynamically assigning the lock to the memory block (202A) such that the memory block (202A) is protected from access by a second HMI device (104B) connected to the PLC (102).

2. The method according to claim 1, wherein dynamically assigning the lock to the memory block (202A) comprises:
determining whether the memory block (202A) is protected using a lock table (118);
if the memory block (202A) is not protected, setting a protection status of the memory block (202A) to protected in the lock table (118);
assigning a unique password to the memory block (202A) in the lock table (118); and
updating a unique identifier associated with the first HMI device (104A) in the lock table (118).

3. The method according to claim 2, wherein determining whether the memory block (202A) is protected comprises:
if the memory block (202A) is protected, rejecting the request to assign the lock to the memory block (202A).

4. The method according to claim 1, further comprising:
receiving a request to access a memory block (202A) from the second HMI device (104B), wherein the request comprises a memory address of the memory block (202A) and unique identifier of the second HMI device (104B);
determining whether the memory block (202A) is protected from access by the second HMI device (104B) using the lock table (118);
if the memory block (202A) is protected, denying access to the memory block (202A) to the second HMI device (104B); and
if the memory block (202A) is not protected, providing access to the memory block (202A) to the second HMI device (104B).

5. The method according to claim 4, wherein determining whether the memory block (202A) is protected from access by the second HMI device (104B) comprises:
determining the protection status set for the memory block (202A) using the lock table (118);
determining whether the protection status for the memory block (202A) is set as protected in the lock table (118); and
if the protection status is set as protected, determining whether the memory block (202A) is protected by the first HMI device (104A) using the lock table (118).

6. The method according to claim 1 or 2, further comprising:
receiving a request to access the memory block (202A) from the first HMI device (104A), wherein the request comprises a unique identifier of the first HMI device (104A), a unique password and a memory address of the memory block (202A);
determining whether the memory block (202A) is protected based on the memory address of the memory block (202A) using the lock table (118);
if the memory block (202A) is protected, verifying the unique password for accessing the memory block (202A) using the lock table (118);
determining whether the unique password is successfully verified;
if the unique password is successfully verified, providing access to the memory block (202A) to the first HMI device (104A); and
if the unique password is not successfully verified, denying access to the memory block (202A) to the first HMI device (104A).

7. The method according to claim 6, wherein providing access to the memory block (202A) to the first HMI device (104A) comprises:
receiving a request to update a process value stored in the memory block (202A); and
updating the process value stored in the memory block (202A) based on the request.

8. The method according to claim 1 or 2, further comprising:
receiving a request to delete the lock assigned to the memory block (202A) from the first HMI device (104A), wherein the request comprises a unique identifier of the first HMI device (104A), a unique password and a memory address of the memory block (202A);
determining whether the memory block (202A) is protected based on the memory address of the memory block (202A) using the lock table (118);
if the memory block is protected, determining whether the memory block (202A) is protected by the first HMI device (104A);
if the memory block (202A) is protected by the first HMI device (104A), verifying the unique password received in the request using the lock table (118);
if the memory block (202A) is not protected by the first HMI device (104A), rejecting the request to delete the lock assigned to the memory block (202A);
determining whether the unique password is successfully verified;
if the unique password is successfully verified, dynamically deleting the lock assigned to the memory block (202A); and
if the unique password is not successfully verified, rejecting the request to delete the lock assigned to the memory block (202A).

9. The method according to claim 1, further comprising:
updating the unique password assigned to the memory block (202A) in the lock table (118) based on a request received from the first HMI device (104A).

10. A programmable logic controller (PLC) (102) comprising:
a memory (108) comprising a plurality of memory blocks (202A-P), each of the memory blocks (202A-P) is associated with a unique memory address;
an interface unit (112) connectable to multiple Human Machine Interface (HMI) devices (104A-N); and
a processor (110) coupled to the memory (108) and the interface unit (112), **characterized in that** the processor (110) is configured for:
determining a memory block (202A) from the plurality of memory blocks (202A-P) based on a request to assign a lock to said memory block (202A) received from one of the HMI devices (104A), wherein the request comprises a memory address of the memory block to be protected; and
dynamically assigning the lock to said memory block (202A) such that said memory block (202A) is protected from access by the remaining HMI devices (104B-N).

11. The PLC (102) according to claim 10, wherein said each memory block (202) stores process values associated with equipments in an automation environment.

12. The PLC (102) according to claim 10 or 11, wherein in dynamically assigning the lock to said memory block (202A), the processor (110) is configured for:
determining whether said memory block (202A) is protected using a lock table (118);
if the memory block (202A) is not protected, setting a protection status of the memory block (202A) to protected in the lock table (118);
assigning a unique password to the memory block (202A) in the lock table (118); and
updating a unique identifier associated with the first HMI device (104A) in the lock table (118).

13. The PLC (102) according to claim 10 or 11, wherein the processor (110) is configured for:
determining whether a memory block (202A) is protected using a lock table (118) based on a request to access said memory block (202A) received from said one of the HMI devices (104A), wherein the request comprises a unique identifier of said HMI device (104A), a unique password and a memory address of said memory block (202A);
if said memory block (202A) is protected, verifying the unique password for accessing said memory block (202A) using the lock table (118);
determining whether the unique password is successfully verified;
if the unique password is successfully verified, providing access to said memory block (202A) to said HMI device (104A); and
if the unique password is not successfully verified, denying access to said memory block (202A) to said HMI device (104A).

14. The PLC according to claim 10 or 11, wherein the processor (110) is configured for:
determining whether the memory block (202A) is protected based on a request to delete the lock assigned to the memory block (202A) from one of the HMI devices (104A) using the lock table (118);
if the memory block is protected, determining whether the memory block (202A) is protected by said HMI device (104A);
if the memory block (202A) is protected by said HMI device (104A), verifying the unique password received in the request using the lock table (118);
if the memory block (202A) is not protected by said HMI device (104A), rejecting the request to delete the lock assigned to the memory block (202A);
determining whether the unique password is successfully verified;
if the unique password is successfully verified, dynamically deleting the lock assigned to the memory block (202A); and
if the unique password is not successfully verified, rejecting the request to delete the lock assigned the memory block (202A).

15. An automation system (100) comprising a programmable logic controller (PLC) (102) according to any of the claims 10 to 14.
